# EUROPEAN PATENT APPLICATION

(11) **EP 3 050 535 A1**
(43) Date of publication of application: **03.08.2016**
(21) Application number: 15382025.3
(22) Date of filing: 30.01.2015
(51) Int. Cl.: A61C 13/00, A61C 13/083, A61C 13/34, A61C 13/20

(54) **MANUFACTURE OF WORKING MODELS USING COMPUTER NUMERICAL CONTROL (CNC) FOR THE PRODUCTION OF DENTAL PROSTHESES**

(71) Applicant: Felix Gomez Bano, S.L.U., 15002 La Coruna (ES)
(72) Inventor: Gómez Baño, Félix, E-15002 La Coruña (ES)
(74) Representative: ABG Patentes, S.L.

(57) **Abstract**

The invention is intended for a manufacturing process of coated working models for the production of dental prostheses using a "digital workflow" comprising:
- scanning the patient's mouth to obtain a digital file containing the patient's scanned mouth;
- processing using a computer-aided design and computer-aided manufacturing system (CAD/CAM) of this digital file in order to generate the necessary information to produce a model using a computer numerical control device (CNC);
- mixing the powder/liquid components of a coating for dental use and pouring and setting this mixture in a suitable mould, thereby producing a coating product; and
- processing the coating product in the CNC device using the information generated during the CAD/CAM process.

## Description

### FIELD OF THE INVENTION

The invention is connected with the field of prosthodontics and is specifically related to the manufacture of working models with coatings to produce skeletal and direct ceramic dental prostheses by means of a new technological process currently known as "intra-oral digital workflow".

### BACKGROUND OF THE INVENTION

The procedure for manufacturing dentures or prostheses initially consists of taking a mould or "impression" of the patient's mouth.

Traditionally, the process of taking a dental impression has been done using materials such as silicone, alginates or polyethers, then pouring plaster (type III, IV or V) or resins into the impression that has been taken in order to obtain a mould that represents the patient's mouth. However, these reproductions are not precise in many cases and/or may suffer alterations during the process of being handled from the start of taking the impression through to obtaining the working model, which affects their traceability throughout the different prosthetic stages. Therefore it is an inaccurate and unpredictable process as it largely depends on human factors and normally requires several tests to be carried out on the patient's mouth before the final production process. Also, taking the impression is unpleasant for the patient, as they have to keep the impression material in their mouth for a considerable length of time. If the patient cannot tolerate the material to the point where they vomit and the mould cannot be made while they are conscious, they have to be sedated or be given a general anaesthetic.

In comparison to the conventional process based on testing, trial and error, digital working techniques have recently appeared. In the last few years the dental industry has incorporated digital intra-oral cameras or scanning devices in dental clinics that use photography and video in order to obtain a very precise and comfortable impression of the morphology of the mouth so that these images can then be processed and converted into prototype 3-D models. These digital files are normally in STL format, although other formats can be used. Also, because of their great precision, these intra-oral images are beneficial in terms of their storage (they can be stored as a diagnostic image file in order to reduce the physical space required for working models in dental clinics - here it is important to consider that in Europe these models, either as physical models or as digital files, must be stored and available to the health authorities for 5 years) and their distribution (they can be sent easily, for example by e-mail, to the dental laboratory so that they can be processed using suitable software for the creation of physical models, dental structures for subsequent coating as required by the clinical prescriber).

However, the use of digitally scanning patients' mouths is currently limited to the production of models made of plastic which are processed in fast prototyping machines, while practically all dental prostheses are based on plaster moulds or coatings.

At present, the coatings used for dental prostheses are manipulated using materials that are pre-mixed by hand. First a vessel such as a cup is filled with the coating powder, an amount of water is then added and it is mixed by hand, with the possibility of mixing the material in a vacuum. Specific vibrating devices are then used to add the filling material to the impressions, in this case the coatings. After waiting for the lengths of time stipulated by the different manufacturers for this manual process, the mould can be removed from the silicone or alginate.

Therefore, the benefits offered by digital scanning techniques in taking impressions (precision, speed, simplicity, etc.) are subsequently lost due to the impossibility of developing prosthetic structures on the plastic prototypes obtained.

As a result of this, there is a need to increase the versatility of the digital workflow in the field of prosthodontics, extending the application of digital mouth scanning to other potential usual prosthetic dental solutions.

### BRIEF DESCRIPTION OF THE INVENTION

The purpose of this invention is to resolve the disconnection between intra-oral digital scanning and some of the most usual prosthetic solutions, such as removable skeletal partial prostheses or fixed ceramic prostheses. In particular, the inventor has found that based on a digital file (STL format or others) scanned by a dentist, orthodontist or maxillofacial surgeon from a patient's mouth, it is possible to produce high-quality working models in just a short time, using computer numerical control coating which can be used to develop prosthetic structures in a precise, accurate manner.

In one respect, the invention is aimed at a manufacturing process of coated working models for the production of dental prostheses (the invention process) which comprises:
- scanning the patient's mouth to obtain a digital file containing the patient's scanned mouth;
- processing using a computer-aided design and computer-aided manufacturing system (CAD/CAM) of this digital file in order to generate the necessary information to produce a model using a computer numerical control device (CNC);
- mixing the powder/liquid components of a coating for dental use and pouring and setting this mixture in a suitable mould, thereby producing a coating product; and
- processing the coating product in the CNC device using the information generated during the CAD/CAM process.

This process is useful to manufacture both full-mouth coated working models as well as individual models of teeth (dies).

In another respect, the invention is aimed at a working model for the full mouth for the production of dental prostheses that can be obtained by means of the invention process. Full mouth coated working models can be used subsequently, for example, for producing skeletal dental prostheses.

In another respect, the invention is aimed at a die for producing dental prostheses obtainable by means of the invention process. The individual working models or dies can be mounted in a base model (main model) and then used subsequently, for example, to produce dental prostheses made entirely of ceramic material.

In another respect, the invention is aimed at the coating product that is used in the invention process. This product is obtainable by means of a process that comprises:
- mixing the powder /liquid components of a coating for dental use, and
- pouring this mixture into a suitable mould, normally where it will become disk-shaped, where it sets.

In another respect, the invention is aimed at a process to prepare the coating product that is used in the invention process. This process comprises:
- mixing the powder /liquid components of a coating for dental use, and
- pouring this mixture into a suitable mould, normally where it will become disk-shaped, where it sets.

These and other aspects, together with specific achievements of the invention, will become clearer in the light of the following detailed description and the claims, as well as the enclosed drawings.

### BRIEF DESCRIPTION OF THE DRAWINGS

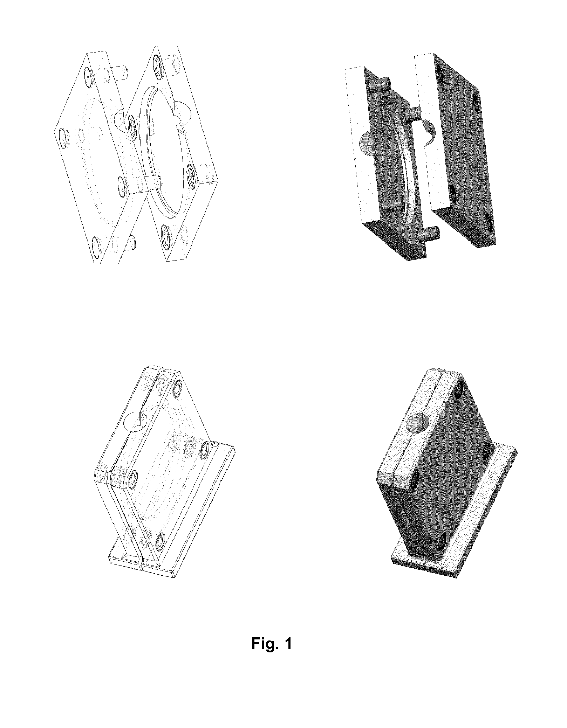

**Figure 1** shows a suitable mould for obtaining a disk-shaped coating product for CNC at different heights.

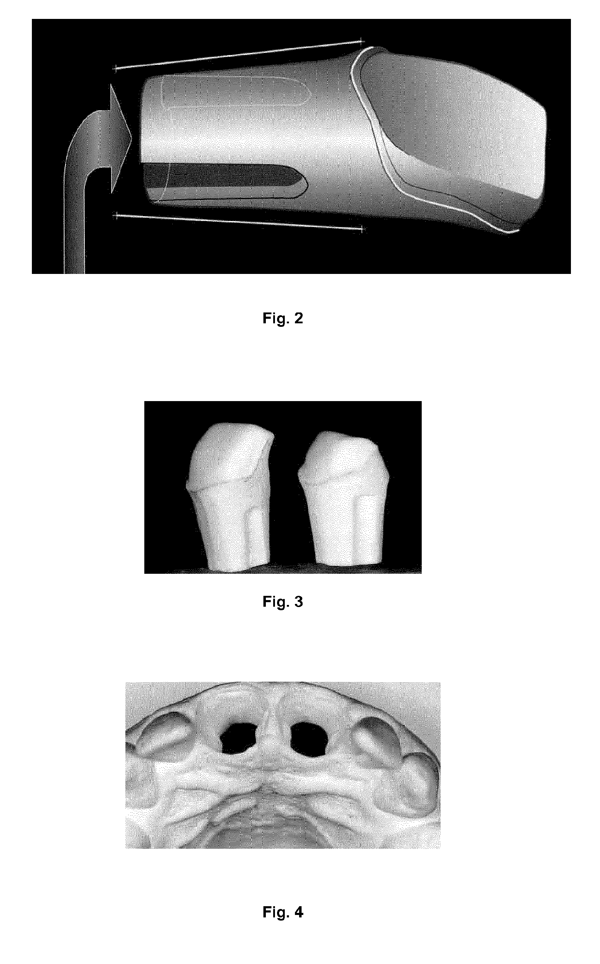

**Figure 2** shows a removable die in coating obtained by CNC milling, which would be suitable for producing exclusively ceramic dental prostheses (feldspar).
**Figure 3** shows removable dies in coating obtained by CNC milling, which would be suitable for producing exclusively ceramic dental prostheses (feldspar).
**Figure 4** shows a base model (into which the dies are fitted).

### DETAILED DESCRIPTION OF THE INVENTION

Digital imaging has had a significant impact on dentistry in general and prosthodontics in particular. A wide range of equipment and computer programmes has recently been introduced that makes it possible to replace traditional processes with processes that take advantage of all of the benefits offered by digital technology. Today, digital systems for taking impressions as well as computer-aided design and manufacturing systems (CAD/CAM) are common in this field. However, the "digital workflow" is interrupted once a model has been obtained in plastic using these digital tools (intra-oral digital scanning, CAD/CAM, etc.). This invention provides a solution to this problem, proposing a manufacturing process for prosthetic models (both working models for the full mouth and dies) with CNC coating.

The process starts at the dental clinic by making a scan of the patient's mouth to obtain the impression of the mouth in a digital file. The most common name used for these digital files is stereolithography or an STL file. These digital files can be generated by different 3-D applications available on the market. The scanners that are most widely used for taking digital impressions include the Apolo Di, Ithero, True Definition Scanner and TRIOS.

This scan should preferably be made using a scanner or intra-oral scanning directly on the patient's own dental structure. However, it is also possible to take digital impressions indirectly, for example by using a previously obtained positive (in plaster or other material).

The digital file can then be sent to be processed using a computer-aided design and manufacturing system (CAD/CAM). This CAD/CAM system, which is normally located in the dental laboratory, makes it possible to design and generate the cutting route or strategy (milling) required in order to obtain the prosthetic working model, from which different prosthetic structures can be produced.

Next, the CAD/CAM model obtained is converted into a physical working prosthetic, either of the full mouth or of an individual piece, using a computer numerical control device or instrument (CNC). The material used to model in the CNC device is a coating product for dental use.

Coatings for dental use are materials that are widely known by experts in this field. In principle, the coating product for this invention can be obtained from the same components that are normally used for dental coatings. In general, coating materials for dental use comprise two components or stages, one in powder form and the other as a liquid, which have to be mixed.

The powdered form is also referred to as "refractory" as it includes the refractory charge. The most usual refractory materials include two crystalline forms of silica: quartz and cristobalite. Additives can also be included that make it possible to slightly alter the general behaviour of the product. These additives include, but are not limited to, materials such as colourings, graphites, chlorides, powdered minerals, etc.

The liquid phase is known as an agglutinant and can contain components such as magnesium oxide, ammonium dihydrogen phosphate, monoammonium phosphate and colloidal silica. Today it is quite usual for phosphates to be present in the liquid, and in these cases the coatings obtained are referred to as phosphate coatings. In this invention, binder or alcohol coatings are also considered, where the agglutinant comprises components such as alcohol, ethyl silicate and acid.

Depending on their type, the coating materials have the following formats:
- in powdered form for mixing with water at the moment of use;
- in powdered form for mixing with a special liquid produced by the manufacturer (which can be used in pure form to obtain the maximum expansion or diluted with distilled water) and;
- in powdered form for mixing with a solution obtained by mixing the liquids produced by the manufacturer.

When mixing the two phases, the liquid is preferably added first to the vessel or container, then sprinkling the powder on top of the liquid. This makes it difficult for micro-bubbles to appear in the powder and makes the mixture more uniform. Also, the manufacturer's instructions regarding the proportion of powder and liquid must be strictly followed in order to obtain constant and high-quality results.

In accordance with this invention, the coating mixture is poured into a mould in order to give it the correct shape, typically a disk shape, although at first it could be any other shape, such as square or rectangular. The product also sets in the mould.

As a specific achievement of the invention, the coating product is a disk with a diameter that varies between approximately 80 mm and approximately 100 mm, approximately 90 mm and approximately 100 mm, or approximately 95 mm and approximately 98.5 mm. The coating disk preferably has a diameter or 98.5 or 95 mm. However, values outside of the indicated ranges are also considered.

As another specific achievement of the invention, the coating product is a square with the following dimensions: between approximately 80 x 80 mm and approximately 100 x 100 mm, between approximately 90 x 90 mm and approximately 100 x 100 mm or between approximately 95 x 95 mm and approximately 98.5 x 98.5 mm. However, values outside of the indicated ranges are also considered.

As another specific achievement of the invention, the coating product, for example in a disk shape, square or rectangular shape, has a height that varies between approximately 10 mm and approximately 40 mm or approximately 14 mm and approximately 30 mm. The height of the coating product is preferably selected between 14 mm, 18 mm, 25 mm or 30 mm. However, the height can be altered easily depending on the working requirements.

As used in this document, the term "approximately" means a slight variation in the specified value, preferably within 10% of the specified value. However, the term "approximately" may mean a greater tolerance of the variation, depending for example on the experimental technique used. An expert in the technique understands these variations of a specified value and they are within the context of this invention. Also, in order to provide a more concise description, some of the quantitative expressions used in this document are not qualified using the term "approximately". It is considered that whether if the term "approximately" is used explicitly or not, the intention is that all of the quantities provided in this document refer to the real value that is given, and that the intention is that they refer to the approximation to this given value that could be reasonably deduced based on usual experience in the technique, including equivalents and approximations due to the experimental and/or measurement conditions for this given value.

After setting, a coating product is obtained that can be processed in the CNC device using the information generated by the CAD/CAM system, resulting in the physical working model.

In the state of the art there are several configurations and programmes (software) for the CAD/CAM system and the CNC device which are known by experts in the field, and which can be used in this invention.

As a preferred form, the CNC device operates on 4 or 5 axes. More preferably, the CNC device should have 5 milling axes.

In this invention, a dry or wet CNC device or milling machine can be used. As a preferred form, the CNC is used dry.

Once the physical working model of the coating has been obtained, this model can be used to make prostheses. Illustrative examples of prosthetic structures that can be manufactured from a coating-based model include but are not limited to the following:
- Partial removable prostheses with metal bases (i.e. partly made of resin and partly of metal), also known as skeletal prostheses. The metallic base can be chrome-cobalt or similar. Based on a full mouth coated working model it is possible to create the skeletal partial removable prosthesis using the lost-wax casting process, together with coatings using the lost-wax process and replaced with injected metal.
- Fixed prostheses or ceramic restoration (feldspar) on natural teeth, external or internal, to create crowns, veneers, incrustations or microveneers. The individual coated working model or die is mounted in the base or main model to be worked on. In this case, the base model can be made of a different material than the die (coating), mainly plaster or a fast 3-D prototyping model.

For the purpose of the final presentation of the work, it may be necessary to make a copy or duplicate of the full mouth working model or individual model in plaster or 3-D prototyping material (resin).

Some of the benefits associated with obtaining the physical prosthetic model in coating from an STL intra-oral file or similar according to the invention process are:
- comfort for the patient and clinician;
- precision and traceability in the manufacturing of ceramic-based removable and fixed skeletal prostheses (feldspar) on coating dies;
- a reduction in the number of manual processes involved in making the model, avoiding manual reduction with wax to eliminate retentive areas, duplication of the reduced model in coating with precision silicas, and,
- increased cost-effectiveness in dental laboratories, by preventing the typical repetitions of manual and traditional processes.

## Claims

1. Manufacturing process of coated working models for the production of dental prostheses, comprising:
- scanning the patient's mouth to obtain a digital file containing the patient's scanned mouth;
- processing using a computer-aided design and computer-aided manufacturing system (CAD/CAM) of this digital file in order to generate the necessary information to produce a model using a computer numerical control device (CNC);
- mixing the powder/liquid components of a coating for dental use and pouring and setting this mixture in a suitable mould, thereby producing a coating product, and
- processing the coating product in the CNC device using the information generated during the CAD/CAM process.

2. Process according to claim 1, where the CNC device operates on 5 axes.

3. Process according to either claim 1 or 2, where the CNC device operates dry.

4. Working model for the production of dental prostheses obtainable by means of the process defined in any of claims 1 to 3.

5. Working model according to claim 4, where this model is for the full mouth.

6. Working model according to claim 4, where this model is a die.

7. Coating product suitable for the process defined in any of claims 1 to 3, whereby this product is obtainable by means of a process comprising:
- mixing the powder/liquid components of a coating for dental use, and
- pouring this mixture into a suitable mould, where it sets.

8. Product according to claim 7, in which the powder component comprises quartz and/or cristobalite.

9. Product according to claim 7, in which the liquid component comprises magnesium oxide, ammonium dihydrogen phosphate, monoammonium phosphate or colloidal silica, or a mixture of the same.

10. Product according to any of claims 7 to 9 in a disk shape.

11. Product according to 10 with a diameter of 98.5 mm or 95 mm and/or a height of 14 mm, 18 mm, 25 mm or 30 mm.
